# EUROPEAN PATENT SPECIFICATION

(11) **EP 2 208 185 B1**
(45) Date of publication and mention of the grant of the patent: **05.06.2013**
(21) Application number: 08806693.1
(22) Date of filing: 29.09.2008
(51) Int. Cl.: G06T 15/20

(54) **METHODS AND APPARATUS FOR CREATING CUSTOMISABLE CAD IMAGE FILES**
VERFAHREN UND VORRICHTUNGEN ZUM ERZEUGEN VON ANPASSBAREN CAD-BILDDATEIEN
PROCÉDÉ ET APPAREIL PERMETTANT DE CRÉER DES FICHIERS IMAGE CAO PERSONNALISABLES

(30) Priority: 29.09.2007 GB 0719053
(43) Date of publication of application: 21.07.2010
(73) Proprietor: Articad Ltd, Watford, Hertfordshire WD18 9BL (GB)
(72) Inventor: TURNER, Richard, Watford, Hertfordshire WD18 9BL (GB)
(74) Representative: Mackenzie, Andrew Bryan
(86) International application number: PCT/GB2008/050877
(87) International publication number: WO 2009/044189

(56) References cited:
- EP-A- 0 794 517
- US-A1- 2001 019 332
- US-A1- 2004 012 602
- PLUMMER M ET AL: "Mass market applications for real-time 3D graphics" COMPUTER GRAPHICS FORUM, AMSTERDAM, NL, vol. 2, no. 8, 1 January 1900 (1900-01-01), pages 143-150, XP002075173 ISSN: 0167-7055

## Description

This invention relates to the production of a set of computer aided design (CAD) files allowing customisation of the rendered surfaces in different combinations, without performing multiple complete renderings of an image.

The production of CAD files, for example to allow architects or designers to demonstrate a three-dimensional rendered image of an interior design such as that for a kitchen, bedroom or bathroom typically requires a new ray-trace rendering process to be carried out for each combination of objects and surface finishes in the design. This is computationally expensive and where images are to be transmitted over band-limited networks such as the Internet, is inefficient in its use of bandwidth.

For example, considering the problem of a kitchen design, an architect or interior designer may select furniture objects, windows, cabinets and worktops or the like from a predetermined database of such objects. The objects have different shapes, dimensions and potentially, surface finishes and colours. In order to produce a photo-realistic image for each combination based on traditional plan or elevation inputs from the architects or designer, it is necessary to carry out a rendering process typically using ray-tracing. The use of ray-tracing allows realistic lighting and perspective effects to be applied. However, the production of such an image using ray-tracing takes no account of edges of objects.

Accordingly, if for example in the kitchen design example above, an architect or designer wishes to demonstrate four different door styles, three different handle selections and three different worktop materials, there are 36 different combinations. It is impractical to generate 36 different photo-realistic images. Thus in practice the possible combinations quickly become unmanageable.

However, there is a desire to allow flexibility of design visualisations in order to help end-users make design choices. Additionally, retail sites have space constraints and are unable to show demonstration configurations of furniture, cabinets etc. in all possible combinations. Accordingly, it is desirable for those sites to be able to demonstrate different combinations on a computer display screen or the like.

Similar considerations apply to the viewing of possible combinations on websites.

Because current technology does not allow edges of objects to be readily discerned, it is not possible to change colours and surface finishes in visualisation files containing images which have already been rendered, and thus there is no way to provide the desired selectable combinations of objects in such photo-realistic images.

One possible approach is to render images using line drawing techniques with hidden line removal and then to attempt to register surface finishes produced by a photo-realistic rendering algorithm, to co-ordinates of the edges of an item. However in practice, registration of edges with the photo-realistic rendered surfaces is poor and the result is therefore of low quality.

US 2004/012602 discloses a method for rendering an image of an object using an object proxy that approximates geomatry of the object; pre-rendered textures are blended together and mapped onto the proxy in dependence of the killing direction.

In a first aspect of the invention there is a method of producing an image data file representative of a rendered three-dimensional image as claimed in Claim 1. The method comprises creating a master image data file representative of a three-dimensional master image which is rendered with contrasting colours for each different object type in the image, creating a plurality of fully rendered image data files representative of the three-dimensional image rendered with realistic surfaces including effects such as shadowing, textures and/or realistic colours, creating a mapping file which records which realistic surfaces are used for different objects types in which fully rendered image data file and which records which contrasting colour is used in the master image data file for each respective object type, selecting a object type realistic surfaces for each object type, processing the master image data file to determine edges of object types in the three dimensional image using the contrasting colour information in the mapping file and an edge detection process, to produce edge coordinate data for one or more respective object type, extracting selected portions of one or more of the fully rendered image files which correspond to the selected realistic surface and object type, the portion boundary of each portion being determined by the relevant edge coordinate data, and combining the extracted portions to produce a composite output image file representative of the three-dimensional image with the selected combination of object type realistic surfaces.

In a second aspect of the invention there is an image file processor as claimed in Claim 6. The image file processor is arranged to create a master image data file representative of a three-dimensional master image which is rendered with contrasting colours for each different object type in the image, to create a plurality of fully rendered image data files representative of the three-dimensional image rendered with realistic surfaces including effects such as shadowing, textures and/or realistic colours, and to create a mapping file which records which realistic surfaces are used for different objects types in which fully rendered image data file and which records which contrasting colour is used in the master image data file for each respective object type.

In another aspect of the invention there is an image display apparatus as claimed in Claim 8. The image display apparatus is arranged to received a master image data file representative of a three-dimensional master image which is rendered with contrasting colours for each different object type in the image, to receive a plurality of fully rendered image data files representative of the three-dimensional image rendered with realistic surfaces including effects such as shadowing, textures and/or realistic colours, and to receive a mapping file which records which realistic surfaces are used for different objects types in which fully rendered image data file and which records which contrasting colour is used in the master image data file for each respective object type and including a user interface arranged to accept user input to select a object type realistic surfaces for each object type, to process the master image data file to determine edges of object types in the three dimensional image using the contrasting colour information in the mapping file and an edge detection process, to generate edge coordinate data for one or more respective object type, to extract selected portions of one or more of the fully rendered image files which correspond to the selected realistic surface and object type, the portion boundary of each portion being determined by the relevant edge coordinate data, to produce and display an image formed as the combination of the extracted portions which is a composite image of the three-dimensional image with the selected combination of object type realistic surfaces.

In a further aspect of the invention there is a computer program product directly loadable into the internal memory of a digital computer, comprising software code portions for performing the steps of claim 1 when said product is run on a computer.

The invention will now be described by way of example with reference to the drawings in which:-
Figure 1 shows a simple room configuration with a single cabinet and worktop;
Figure 2 shows a room with several cabinets and a worktop;
Figure 3 shows a complex room including wall cabinets, white goods and several cabinets;
Figure 4 shows a high-contrast image in accordance with the invention;
Figures 5a, 5b and 5c show an image file with different combinations of surface finishes; and
Figure 6 is a schematic block diagram of the system.

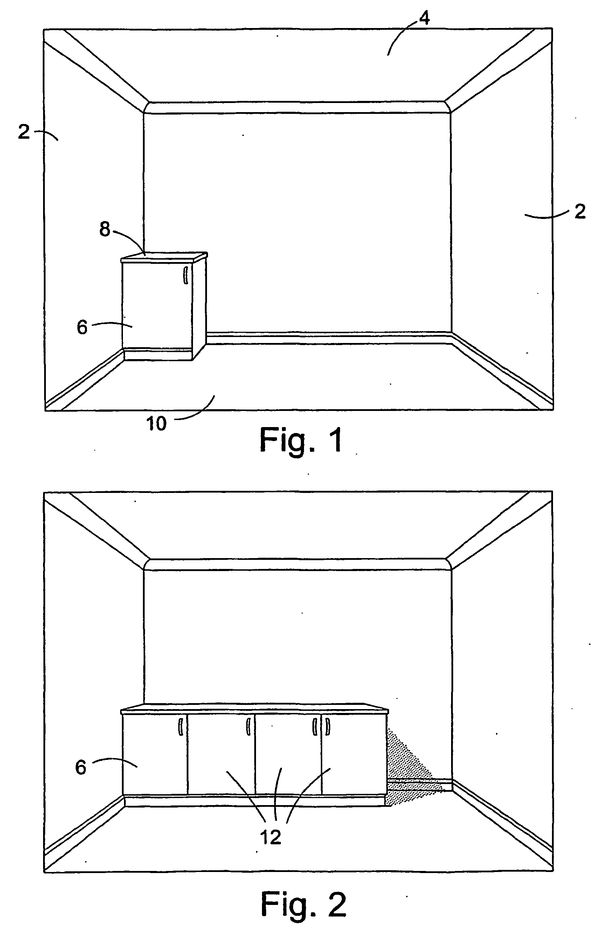

With reference to Figure 1, a simple room visualisation is shown with walls 2, a ceiling 4, a single cupboard unit 6, a worktop 8 and a floor covering 10.

If it were desired to show different surface finishes it is relatively simple in this example to calculate bitmap surface images to be applied to the various object in the image, based on known variables such as the size and shape of the object, the location and orientation of the cupboard door and the position and orientation of the viewer.

In Figure 2, further cupboards 12 have been added and shading 12 has been included.

With this in mind, it now becomes impossible to use a single door bitmap to show different door configurations since shadow direction and shading across each door will differ from one door to the next and the image would no longer look photo-realistic.

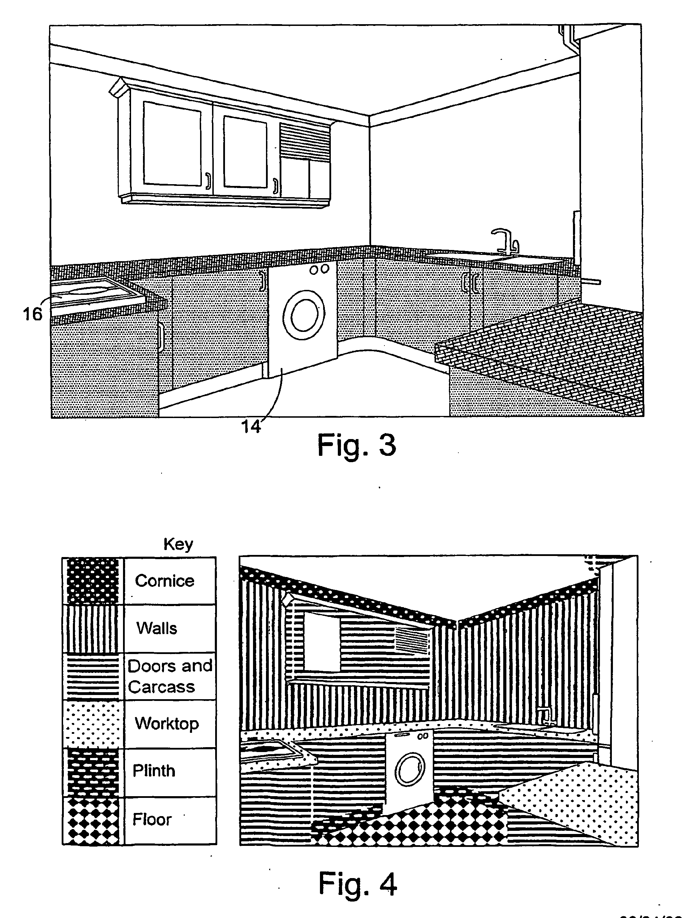

This problem becomes even worse as further objects such as a washing machine 14 and a hob 16 are added into the image as shown in Figure 3.

The ray-tracing engine used to display and create the image is unable to determine the co-ordinate boundaries of the items in the image. Ray-tracing builds up an image without being aware of the context or meaning of the image components and so ray-tracing renderers are unable to provide edge information. Thus the rendering engine cannot return details of the item boundary co-ordinates. Thus once rendered in a conventional way, all information about boundaries between objects in the image is lost.

Figure 4 shows a solution to this problem. By setting the surface renders used by the ray-tracing algorithm to predetermined high-contrast plain colours it is possible to produce a master image with the correct shapes and which, with appropriate post-processing can be used to determine object boundaries.

Preferably the master images have each object rendered in a flat colour with no shadows or lighting effects and without anti-aliasing between edges so that there is presented a sharp edge between differing objects or object types.

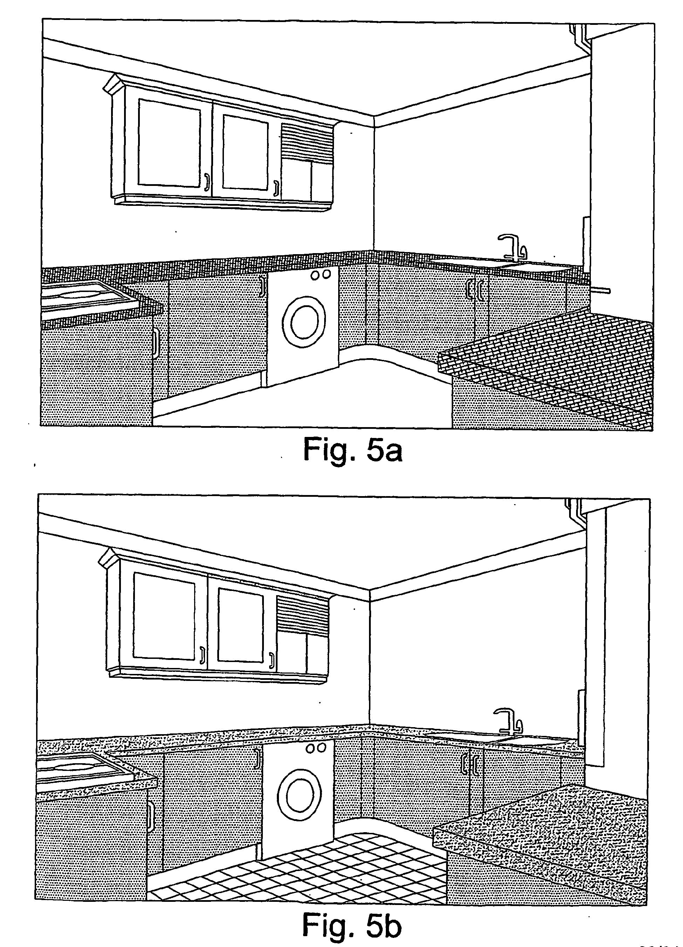

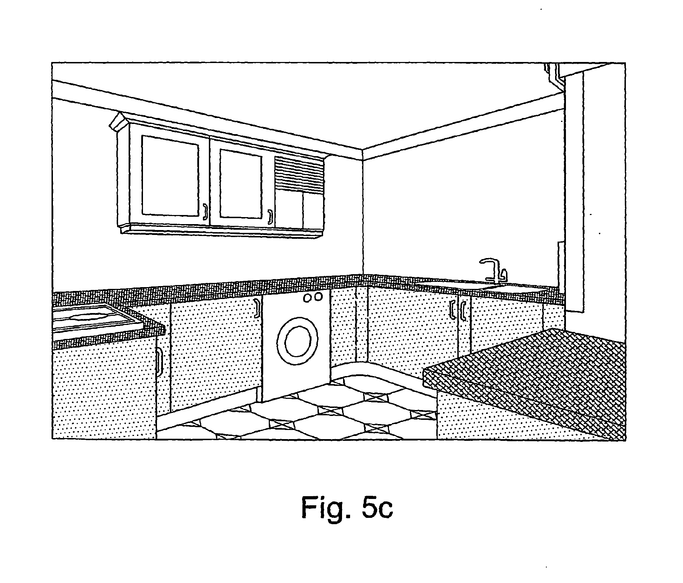

The next step is to create one or more photo-realistic images such as those shown in Figures 5a, 5b and 5c. For example, let us assume a simple case in which two different door styles and three different worktop materials are desired. It is possible to generate all of these items in just three photo-realistic images. In each of Figures 5a, 5b and 5c a different worktop is incorporated. In each of the images only two different door styles need be shown (although in the figures three different door styles and three different floor styles are shown).

Having created the photo-realistic images, the master image of Figure 4 is used to delineate the edges between objects which may then be used to form masks for cutting photo-realistic bitmap images from Figures 5a to 5c. These are then stored as separate object bitmap files. A mapping database is produced to map the bitmap files to their correct location and objects on the master image.

Finally, when an image is desired to be displayed, the mapping database is used to co-ordinate application of different combinations of the bitmap images to the master image to allow any different combination of the bitmap images to be applied together.

Since the bitmap images are rendered in a photo-realistic process, the correct shading and lighting effects are retained. Accordingly the combinations look photo-realistic and yet only a small number of rendering processes have been required to generate the necessary combination. Indeed, it will be appreciated that the maximum number of rendering processes is only as great as the maximum number of different surface finishes required for a particular object type. Thus, for example, if six worktop types are required to be shown but only a smaller number of all other variable elements such as floor coverings, doors etc. are required, then only six rendered images are necessary. Those six rendered images will produce all the necessary bitmap information for any combination.

Accordingly, since the amount of data required to produce the full combination of rendered images is reduced, not only is the flexibility to produce different combinations of images provided without many rendering operations, but also the amount of data which need be stored or transmitted is also greatly reduced.

As an additional enhancement, it may be possible to allow a user to vary colours of elements. For example, a wall image may allow selection of a different colour palette whilst, for example, retaining shading effects. Thus the mapping database may include information about which items are user-colourable in addition to which items may be rendered using a bitmap image.

Accordingly, the rendering CAD system needs to generate an interface file for the display application which describes the name of the master image file with contrasting colours, a naming convention for the composite scene image bitmap files, for example allowing an index number which increments with each file but having a single file name for each object type, the total number of composite scene image files and for each item type (doors, worktops etc.) the RGB or some similar colour value, of the area in the master image file that corresponds to this item, a flag to indicate whether this item is of a user varied colour or is to be selected from a composite scene image bitmap file and if it is to be selected from a composite scene image file then the interface file needs to include the total number of choices for each item finish and preferably the name of the finish of each item for presentation to a consumer and the index number of the file that contains it.

For display, the software application for presentation should read the interface file and identify the master image file. It then creates an image mask for each item type by finding any areas of the image using the RGB colour value for that item type.

The application then identifies the composite scene image files and displays the first such file as a starting point for the consumer to modify. At the same time, any user-varied colour objects will also be presented in a starting colour.

The application then presents the consumer with an interface from which possible item finish names may be selected. As the consumer selects the item, the application identifies the relevant composite scene image file (using the provided interface file and mapping), applies the relevant mask to cut out that item and pastes it on to the consumer's view of the scene. Additionally, the application allows the user to vary the colour of the user-varied colour items.

The application may be further enhanced to allow different cost total to be displayed depending on the selections chosen by the user.

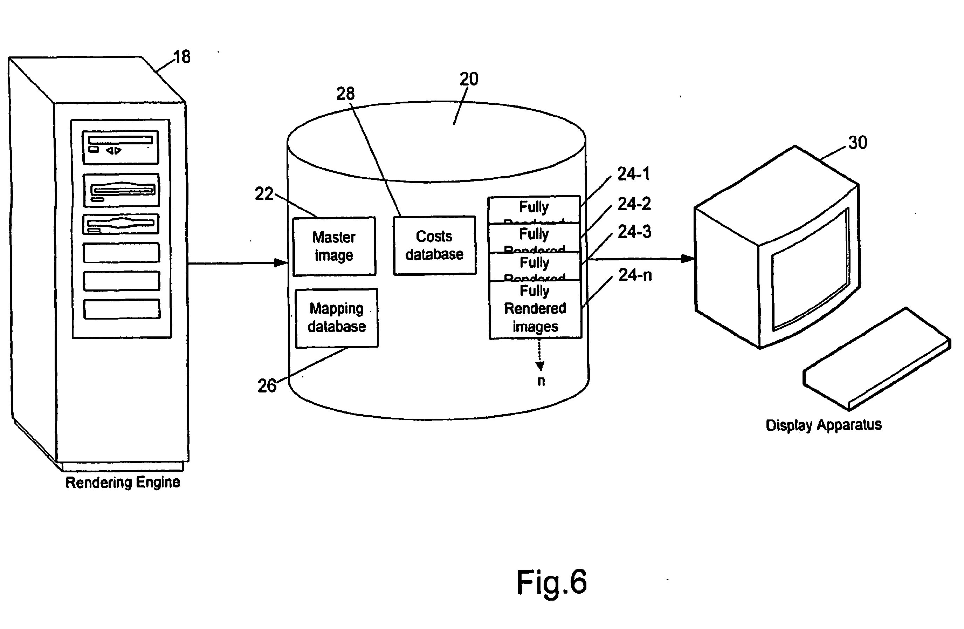

Furthermore, alternative objects may be chosen by the designer which all take up the same space. For example, in a kitchen design example, if a consumer is undecided as to which free-standing range cooker is required but they are sure that it will take up a 900mm space then it might be possible to offer a selection of 900mm range cookers as selectable choices. In this case, multiple master images are produced for the different cookers since different shapes and shadowing etc. will be required. This is true also for any situation in which a different 3-D shape is required to be displayed. For example, different cabinet door styles may stick out further and cast shadows on other components differently, and so have their own "master" and "image" data sets. Similarly, different handle styles are likely to cast different shadows and so have the same requirement. As a result, there are several "trees" of data and images: the room with all cabinets but no doors; the doors with no handles; and the handles.
With reference to Figure 6, a rendering engine 18 produces an image database 20 which may be in the form of single data structure or may be in the form of one or more discrete files.

The rendering engine produces a master image file 22 which contains data representing the master image shown in Figure 4. It also produces one or more fully rendered images 24-1, 24-2, 24-3, 24-n of the forms shown in Figures 5a to 5c.

Additionally a mapping database 26 is produced. Optionally also, a costs database 28 which allows the installed or sale price, for example, of the combination of objects to be displayed is provided.

The mapping database typically contains the following information:-
- The name of the Chroma-Key Master Image file or the names of several Master Image files if required by the design.
- The naming convention for the Composite Scene Image files (allowing an index number which increments with each file)
- The total number of Composite Scene Image files
- For each item type (doors, worktops, etc.):
- The RGB value of the area in the Chroma-Key Master Image that corresponds to this item
- A flag to indicate whether this item is of a User-Varied Colour, or to be selected from a Composite Scene Image file
- If the latter, then:
- The total number of choices for each item finish
- The name of the finish of each item (to present to the consumer) and the index number of the file that contains it
- The name of an image file containing a thumbnail view showing the finish of each item (to present to the consumer to help them choose which finish to view)

Finally, a display terminal 30 is provided. The terminal may include processing capability to take user input and using the database 20, display a composite image dependent on user selection. Alternatively, the display terminal 30 may be a terminal running some form of relatively dumb image display application such as a web browser with processing being done as part of a back-end application on a web server (not shown). Such a server would be interposed between the database 20 and the terminal 30.

It will be appreciated that the client display application may undertake the edge detection process on the rendered images or the interface file between the rendering engine and the client application my include pre-cut rendered versions of the different display objects. The choice of where to perform the edge detection and cutting operations will be dictated largely by processing power available in the client hardware.

During prototyping, large efficiency improvements have been measured. The level of data compression achieved by a prototype model is of the order of 100,000:1. For example, in a room design with 10 different user selectable items (doors, handles, plinth, worktop, etc). There are between 3 and 15 different options for each of these items, which provides nearly 20,000,000 possible permutations. To represent these permutations in an 800x600 JPG file would consume almost 4.5TB of storage. The prototype is able to represent the same information in just under 42MB. Also, only 15 different images need to be rendered against the 20,000,000 which would conventionally be required to allow rendering of all permutations.

## Claims

1. A method of producing an image data file representative of a rendered three-dimensional image comprising:-
(a) creating a master image data file representative of a three-dimensional master image which is rendered with contrasting colours for each different object type in the image,
(b) creating a plurality of fully rendered image data files representative of the three-dimensional image rendered with realistic surfaces including effects such as shadowing, textures and/or realistic colours,
(c) creating a mapping file which records which realistic surfaces are used for different objects types in which fully rendered image data file and which records which contrasting colour is used in the master image data file for each respective object type,
(d) selecting a object type realistic surfaces for each object type,
(e) processing the master image data file to determine edges of object types in the three dimensional image using the contrasting colour information in the mapping file and an edge detection process, to produce edge coordinate data for one or more respective object type,
(f) extracting selected portions of one or more of the fully rendered image files which correspond to the selected realistic surface and object type, the portion boundary of each portion being determined by the relevant edge coordinate data, and
(g) combining the extracted selected portions to produce a composite output image file representative of the three-dimensional image with the selected combination of object type realistic surfaces.

2. A method according to claim 1, wherein the master image is rendered in flat colours without shadowing or the like.

3. A method according to claim 1 or claim 2, wherein the image date files, the mapping file and the selected portions are merged into one or more composite data file.

4. A method according to any preceding claim, wherein initially the object type realistic surfaces are automatically assigned default values which may subsequently be varied by user selection.

5. A method according to any preceding claim including assigning a financial costs to each selected portion and producing a total cost value associated with the composite output image.

6. An image file processor comprising means to create a master image data file representative of a three-dimensional master image which is rendered with contrasting colours for each different object type in the image, means to create a plurality of fully rendered image data files representative of the three-dimensional image rendered with realistic surfaces including effects such as shadowing, textures and/or realistic colours, means to create a mapping file which records which realistic surfaces are used for different objects types in which fully rendered image data file and which records which contrasting colour is used in the master image data file for each respective object type, means to process the master image data file to determine edges of object types in the three dimensional image using the contrasting colour information in the mapping file and an edge detection process, means to generate edge coordinate data for one or more respective object type, means to extract selected portions of one or more of the fully rendered image files which correspond to the selected realistic surface and object type, the portion boundary of each portion being determined by the relevant edge coordinate data, and means to merge the image date files, the mapping file and the extracted selected portions into one or more composite data file representative of the three-dimensional image with the selected combination of object type realistic surfaces.

7. An image file processor according to claim 6, further arranged to create a master image which is rendered in flat colours without shadowing or the like.

8. Image display apparatus connected to the image file processor as claimed in any one of claims 6 to 7 wherein the image display apparatus is arranged to receive the master image data file, the plurality of fully rendered image data files and the mapping file from the image file processor and including a user interface arranged to accept user input to select a object type realistic surfaces for each object type, pass the object type to the image display apparatus and to receive and display the composite image.

9. Image display apparatus according to claim 8, arranged to automatically assign default initial values to the object type realistic surfaces which may subsequently be varied by user selection.

10. Image display apparatus according to claim 8 or claim 9, arranged to assign financial costs to each selected portion and to produce a total cost value associated with the composite output image.

11. A computer program product directly loadable into the internal memory of a digital computer, comprising software code portions for performing the steps of claim 1 when said product is run on a computer.

## Patentansprüche

1. Verfahren zur Erzeugung einer Bilddaten-Datei, die ein gerendertes dreidimensionales Bild darstellt, mit den folgenden Schritten:
(a) Erzeugen einer Master-Bilddaten-Datei, die ein dreidimensionales Master-Bild darstellt, das mit kontrastreichen Farben für jeden unterschiedlichen Objekttyp in dem Bild gerendert wird,
(b) Erzeugen einer Vielzahl von vollständig gerenderten Bilddaten-Dateien, die das dreidimensionale Bild darstellen, das mit realistischen Oberflächen gerendert wurde, unter Einschluss von Effekten, wie z.B. Schattenwurf, Texturen und/oder realistischen Farben,
(c) Erzeugen einer Abbildungs-Datei, die aufzeichnet, welche realistischen Oberflächen für unterschiedliche Objekttypen in welcher vollständig gerenderten Bilddaten-Datei verwendet werden und die aufzeichnet, welche kontrastreiche Farbe in der Master-Bilddaten-Datei für jeden jeweiligen Objekttyp verwendet wird,
(d) Auswahl von Objekttyp-realistischen Oberflächen für jeden Objekttyp,
(e) Verarbeiten der Master-Bilddaten-Datei zur Feststellung von Kanten von Objekttypen in dem dreidimensionalen Bild unter Verwendung der kontrastreichen Farbinformation in der Abbildungs-Datei und eines Kanten-Detektionsprozesses zur Erzeugung von Kanten-Koordinatendaten für einen oder mehrere Objekttypen,
(f) Extrahieren ausgewählter Teile von einer oder mehreren der vollständig gerenderten Bild-Dateien, die der ausgewählten realistischen Oberfläche und dem Objekttyp entsprechen, wobei die Teilbegrenzung jedes Teils durch die betreffenden Kanten-Koordinatendaten bestimmt wird, und
(g) Kombinieren der extrahierten ausgewählten Teile zur Erzeugung einer zusammengesetzten Ausgabe-Bild-Datei, die das dreidimensionale Bild mit der ausgewählten Kombination von Objekttyp-realistischen Oberflächen darstellt.

2. Verfahren nach Anspruch 1, bei dem das Masterbild in flachen Farben ohne Schattenwurf oder dergleichen gerendert wird.

3. Verfahren nach Anspruch 1 oder 2, bei dem die Bilddaten-Dateien, die Abbildungs-Datei und die ausgewählten Teile zu einer oder mehreren zusammengesetzten Daten-Dateien vereinigt werden.

4. Verfahren nach einem der vorhergehenden Ansprüche, bei dem anfänglich den Objekttyp-realistischen Oberflächen automatisch Vorgabewerte zugeordnet werden, die nachfolgend durch eine Benutzerauswahl änderbar sind.

5. Verfahren nach einem der vorhergehenden Ansprüche, das das Zuordnen von finanziellen Kosten zu jedem ausgewählten Teil und die Erzeugung eines Gesamtkostenwertes einschließt, der dem zusammengesetzten Ausgangsbild zugeordnet ist.

6. Bilddatei-Prozessor mit Einrichtungen zur Erzeugung einer Master-Bilddaten-Datei, die ein dreidimensionales Masterbild darstellt, das mit kontrastreichen Farben für jeden unterschiedlichen Objekttyp in dem Bild gerendert wird, Einrichtungen zur Erzeugung einer Vielzahl von vollständig gerenderten Bilddaten-Dateien, die das dreidimensionale Bild darstellen, das mit realistischen Oberflächen gerendert wird, unter Einschluss von Effekten, wie z.B. Schattenwurf, Texturen und/oder realistischen Farben, Einrichtungen zur Erzeugung einer Abbildungs-Datei, die aufzeichnet, welche realistischen Oberflächen für unterschiedliche Objekttypen in welcher vollständig gerenderten Bilddaten-Datei verwendet werden, und die aufzeichnet, welche kontrastreiche Farbe in der Master-Bilddaten-Datei für jeden jeweiligen Objekttyp verwendet wird, Einrichtungen zur Verarbeitung der Master-Bilddaten-Datei zur Feststellung von Kanten von Objekttypen in dem dreidimensionalen Bild unter Verwendung der kontrastreichen Farbinformation in der Abbildungs-Datei und eines Kanten-Detektionsprozesses, Einrichtungen zur Erzeugung von Kanten-Koordinaten-Daten für ein oder mehrere jeweilige Objekttypen, Einrichtungen zum Extrahieren ausgewählter Teile von einer oder mehreren der vollständig gerenderten Bilddateien, die der ausgewählten realistischen Oberfläche und dem Objekttyp entsprechen, wobei die Teilbegrenzung jedes Teils durch die betreffenden Kanten-Koordinaten-Daten bestimmt ist, und Einrichtungen zum Vereinigen der Bilddaten-Dateien, der Abbildungs-Datei und der extrahierten ausgewählten Teile zu einer oder mehreren zusammengesetzten Daten-Dateien, die das dreidimensionale Bild mit der ausgewählten Kombination von Objekttyp-realistischen Oberflächen darstellen.

7. Bilddatei-Prozessor nach Anspruch 6, der weiterhin so angeordnet ist, dass er ein Masterbild erzeugt, das mit flachen Farben ohne Schattenwurf oder dergleichen gerendert wird.

8. Bild-Darstellungsvorrichtung, die mit dem Bilddatei-Prozessor nach einem der Ansprüche 6 bis 7 verbunden ist, wobei die Bild-Darstellungsvorrichtung so angeordnet ist, dass sie die Master-Bilddaten-Datei, die Anzahl der vollständig gerenderten Bilddaten-Dateien und die Abbildungs-Datei von dem Bilddatei-Prozessor empfängt und eine Benutzerschnittstelle einschließt, die so angeordnet ist, dass sie eine Benutzereingabe zur Auswahl Objekttyp-realistischer Oberflächen für jeden Objekttyp annimmt, den Objekttyp an die Bild-Darstellungsvorrichtung weiterleitet und das zusammengesetzte Bild empfängt und darstellt.

9. Bilddarstellungs-Vorrichtung nach Anspruch 8, die so angeordnet ist, dass sie automatisch anfängliche Vorgabewerte den Objekttyp-realistischen Oberflächen zuordnet, die nachfolgend durch die Benutzer-Auswahl geändert werden können.

10. Bild-Darstellungsvorrichtung nach Anspruch 8 oder 9, die so angeordnet ist, dass die finanzielle Kosten jedem ausgewählten Teil zuordnet und einen Gesamtkostenwert erzeugt, der dem zusammengesetzten Ausgangsbild zugeordnet ist.

11. Computerprogramm-Produkt, das direkt in den internen Speicher eines digitalen Rechners ladbar ist, mit Software-Code-Teilen zur Durchführung der Schritte nach Anspruch 1, wenn das Produkt auf einem Rechner abläuft.

## Revendications

1. Procédé de création d'un fichier de données d'image représentatif d'une image restituée en trois dimensions comprenant :
(a) la création d'un fichier de données d'image principale représentatif d'une image principale en trois dimensions qui est restituée avec des couleurs contrastées pour chaque type d'objet différent au sein de l'image,
(b) la création d'une pluralité de fichiers de données d'image entièrement restituée représentatif de l'image en trois dimensions restituée avec des surfaces réalistes comprenant des effets tel qu'un ombrage, des textures et/ou des couleurs réalistes,
(c) la création d'un fichier de mappage qui enregistre les surfaces réalistes qui sont utilisées pour différents types d'objets dans tel ou tel fichier de données d'image restituée, et qui enregistre la couleur contrastée qui est utilisée dans le fichier de données d'image principale pour chaque type d'objet respectif,
(d) la sélection de surfaces réalistes de type d'objet pour chaque type d'objet,
(e) le traitement du fichier de données d'image principale afin de déterminer les bords des types d'objets dans l'image en trois dimensions en utilisant des informations de couleur contrastée au sein du fichier de mappage et d'un processus de détection de bords, afin de produire des données de coordonnées de bords pour un ou plusieurs type(s) d'objet(s) respectif(s),
(f) l'extraction de parties sélectionnées d'un ou plusieurs des fichiers d'image entièrement restituée qui correspondent à la surface réaliste et au type d'objet sélectionnés, la limite de chaque partie étant déterminée par les données de coordonnées des bords en question, et
(g) la combinaison des parties sélectionnées extraites afin de produire un fichier d'image de sortie composite.

2. Procédé selon la revendication 1, dans lequel l'image principale est restituée en couleurs unies sans ombrage ou similaire.

3. Procédé selon la revendication 1 ou 2, dans lequel les fichiers de données d'image, le fichier de mappage et les parties sélectionnées sont fusionnés en un ou plusieurs fichier(s) de données composite(s).

4. Procédé selon l'une quelconque des revendications précédentes, dans lequel, initialement, les surfaces réalistes de type d'objet se voient automatiquement assigner des valeurs par défaut qui peuvent ensuite être modifiées par un choix de l'utilisateur.

5. Procédé selon l'une quelconque des revendications précédentes, qui comprend l'attribution d'un coût financier à chaque partie sélectionnée et la production d'une valeur de coût total associée à l'image de sortie composite.

6. Processeur de fichiers d'image qui comprend un moyen de création d'un fichier de données d'image principale représentatif d'une image principale en trois dimensions qui est restituée avec des couleurs contrastées pour chaque type d'objet différent au sein de l'image, un moyen de création d'une pluralité de fichiers de données d'image entièrement restituée représentatifs de l'image en trois dimensions restituée avec des surfaces réalistes comprenant des effets tels qu'un ombrage, des textures et/ou des couleurs réalistes , un moyen de création d'un fichier de mappage qui enregistre les surfaces réalistes qui sont utilisées pour différents types d'objets dans tel ou tel fichier de données d'image restituée, et qui enregistre la couleur contrastée qui est utilisée dans le fichier de données d'image principale pour chaque type d'objet respectif, un moyen de traitement du fichier de données d'image principale afin de déterminer les bords des types d'objets dans l'image en trois dimensions à l'aide des informations de couleur contrastée au sein du fichier de mappage et d'un processus de détection de bords, un moyen de génération de données de coordonnées de bords pour un ou plusieurs type(s) d'objet(s) respectif(s), un moyen d'extraction de parties sélectionnées d'un ou plusieurs des fichiers d'image entièrement restituée qui correspondent à la surface réaliste et au type d'objet sélectionnés, la limite de chaque partie étant déterminée par les données de coordonnées des bords en question, et un moyen de fusion des fichiers de données d'image, du fichier de mappage et des parties sélectionnées extraites en un ou plusieurs fichier(s) de données composite(s) représentatif(s) de l'image en trois dimensions avec la combinaison sélectionnée de surfaces réalistes de type d'objet.

7. Processeur de fichiers d'image selon la revendication 6, prévu en outre pour créer une image principale qui est restituée en couleurs unies sans ombrage ou similaire.

8. Dispositif d'affichage d'images relié au processeur de fichiers d'image selon l'une quelconque des revendications 6 ou 7, où le dispositif d'affichage d'images est prévu pour recevoir le fichier de données d'image principale, la pluralité de fichiers de données d'image entièrement restituée et le fichier de mappage de la part du processeur de fichiers d'image, et comprenant une interface utilisateur prévue pour accepter une saisie utilisateur afin de sélectionner des surfaces réalistes de type d'objet pour chaque type d'objet, pour transmettre le type d'objet au dispositif d'affichage d'images, et pour recevoir et afficher l'image composite.

9. Dispositif d'affichage d'images selon la revendication 8, prévu pour attribuer automatiquement des valeurs initiales par défaut aux surfaces réalistes de type d'objet qui peuvent ensuite être modifiées par une sélection de l'utilisateur.

10. Dispositif d'affichage d'images selon la revendication 8 ou 9, prévu pour attribuer des coûts financiers à chaque partie sélectionnée et pour produire une valeur de coût total associée à l'image de sortie composite.

11. Programme d'ordinateur chargeable directement dans la mémoire interne d'un ordinateur numérique, qui comprend des parties de code logiciel destinées à exécuter les étapes de la revendication 1 lorsque ledit produit est exécuté sur un ordinateur.
